# EUROPÄISCHE PATENTANMELDUNG

(11) **EP 3 156 669 A1**
(43) Veröffentlichungstag der Anmeldung: **19.04.2017**
(21) Anmeldenummer: 16191446.0
(22) Anmeldetag: 24.06.2013
(51) Int. Cl.: F16B 31/02, F16B 33/02, H01R 4/36

(54) **ABREISSSCHRAUBE, ZUGEHÖRIGES SYSTEM SOWIE VORRICHTUNG ZUM SCHRAUBKLEMMEN ELEKTRISCHER LEITER MIT EINER SOLCHEN ABREISSSCHRAUBE**

(30) Priorität: 29.06.2012 DE 102012013176
(62) Teilanmeldung aus: 13732831.6
(71) Anmelder: Pfisterer Kontaktsysteme GmbH, 73650 Winterbach (DE)
(72) Erfinder: Frank, Erich, 73269 Hochdorf (DE)
(74) Vertreter: Bartels & Partner

(57) **Zusammenfassung**

Die Erfindung betrifft eine Abreißschraube (20), insbesondere für eine Vorrichtung (1) zum Schraubklemmen elektrischer Leiter (2, 4), mit einem Gewindeabschnitt (22) zum Einschrauben der Abreißschraube (20) in einen Klemmenkörper (10), dadurch gekennzeichnet, dass der Gewindeabschnitt (22) mindestens abschnittsweise ein Gewinde mit einem unsymmetrischen Gewindeprofil aufweist, insbesondere dass der Gewindeabschnitt (22) mindestens abschnittsweise ein Sägengewinde aufweist, sowie ein System (40) aufweisend eine solche Abreißschraube (20) und ein Schubelement (30) und eine Vorrichtung (1) zum Schraubklemmen elektrischer Leiter (2, 4) mit einer solchen Abreißschraube (20).

## Beschreibung

Die Erfindung betrifft eine Abreißschraube, ein zugehöriges System aufweisend eine solche Abreißschraube und ein Schubelement, sowie eine Vorrichtung zum Schraubklemmen elektrischer Leiter mit einer solchen Abreißschraube.

Beispielsweise in der Schraubverbindungstechnik von elektrischen Kabelleitern für die Energieversorgungstechnik besteht die Anforderung, dass Befestigungsmittel von Verbindungselementen, insbesondere Schraubklemmen, nahe der Oberfläche des Klemmenkörpers enden, insbesondere dass die Verbindungselemente nicht über die Oberfläche des Klemmenkörpers überstehen, da nach dem Klemmen und Verbinden der Leiter Isolierschichten über den Klemmenkörper aufgebracht werden, beispielsweise Isoliermuffen, und jeder Überstand über den Klemmenkörper die Gebrauchseigenschaften dieser Isolierschichten beeinträchtigt.

Aus der DE 10 2004 039 811 A1 sowie der zugehörigen EP 1 626 187 B1 sind Abreißschrauben bekannt, mit denen die gestellten Anforderungen an eine dauerhafte Kontaktsicherheit und Stromtragfähigkeit der Verbindungselemente bei einfacher Handhabung erfüllt werden.

Aus der EP 2 375 502 A1 ist ein Klemmenkörper bekannt, in den mehrere Abreißschrauben einschraubbar sind.

Aus der DE 20 2006 008 314 U1 ist eine Befestigungsanordnung mit einem Kopfteil und einem Schaftteil bekannt, wobei an dem Kopfteil und auf dem Schaftteil eine Scheibe drehbar gehalten ist, und wobei das Kopfteil und die Scheibe mit jeweils einer funktionellen Beschichtung überzogen sind, so dass beim Anziehen die Scheibe gegenüber einem Bauteil keine Relativbewegung ausführt, d.h., dass sich beim Anziehen immer das Kopfteil auf der Scheibe dreht, nicht aber die Scheibe auf dem Bauteil.

Aus der DE 25 14 206 A1 ist eine Vorrichtung zur Klemmverbindung elektrischer Leiter bekannt mit einem einen Anschluss haltenden Gehäuse, in dem eine mit einem Klemmelement verbundene Schraube gegen eine mit dem Anschluss elektrisch verbundene Gegenlage fixierbar ist, wobei der Anschluss Teil eines die ein Sägengewinde aufweisende Schraube zwischen seinen mit Sägengewindesegmenten versehenen Schenkeln senkrecht zur seiner die Gegenlage bildenden Basis führenden U-förmigen, im Gehäuse fest verankerten Anschlusselements ist.

Aus der DE 32 07 975 A1 ist eine gewindeselbstformende Schraube mit einem symmetrischen Gewindeprofil bekannt für den Einsatz in Kunststoff, wobei sich der Flankenwinkel von der Flankenspitze bis zum Gewindegrund stetig vergrößert.

Der Erfindung liegt die Aufgabe zugrunde, eine Abreißschraube sowie ein System mit einer solchen Abreißschraube und einem Schubelement und eine Vorrichtung zum Schraubverbinden elektrischer Leiter mit einer solchen Abreißschraube bereitzustellen, mit denen die Kontaktsicherheit und Stromtragfähigkeit der mittels der Abreißschraube hergestellten Verbindung noch weiter verbessert sind. In einer Ausführungsart soll dabei die Betätigung der Abreißschraube, insbesondere das Klemmen der elektrischen Leiter und das genaue Abreißen der Abreißschraube, sowie die Herstellung der Schraubverbindung weiter vereinfacht sein.

Diese Aufgabe ist durch die im Anspruch 1 bestimmte Abreißschraube gelöst. Ein zugehöriges System aus Abreißschraube und Schubelement sowie eine zugehörige Vorrichtung zum Schraubverbinden von elektrischen Leitern sind in den nebengeordneten Ansprüchen bestimmt. Besondere Ausführungsarten der Erfindung sind in den Unteransprüchen bestimmt.

In einer Ausführungsart weist der Gewindeabschnitt der Abreißschraube mindestens abschnittsweise ein unsymmetrisches Gewindeprofil auf, insbesondere mindestens einen Abschnitt mit einem Sägengewinde. Dadurch ist gegenüber den bekannten Abreißschrauben mit ihrem metrischen ISO-Gewinde bei gleichem Drehmoment eine höhere Klemmkraft der Abreißschraube erreichbar. Durch die im Verhältnis zum metrischen Gewinde weniger geneigten Druckflächen ist zudem die Reibung im Gewinde kleiner, da der Druck nahezu senkrecht auf die belastete Gewindeflanke trifft. Beim metrischen Gewinde ist die Flanke um 30° geneigt, wodurch Querkräfte entstehen, welche die Reibung erhöhen und damit zu Kraftverlusten führen können.

In einer Ausführungsart weist der zwischen einem ersten Ende und einem in Längsrichtung der Abreißschraube gegenüberliegenden zweiten Ende angeordnete Gewindebereich über mindestens einen Teil seiner axialen Erstreckung, vorzugsweise über die gesamte axiale Länge, das Sägengewinde als Außengewinde auf. Die Abreißschraube weist eine mindestens zum ersten Ende hin offene Bohrung auf, wobei die Bohrung eine axiale Abstützung für ein in die Bohrung einsetzbares Schubelement aufweist, mittels dem beim Eindrehen der Abreißschraube an der Abstützung eine Druckkraft in die Abreißschraube einleitbar ist und gleichzeitig in einem dem ersten Ende näheren Abschnitt der Abreißschraube eine Zugkraft einleitbar ist. Dadurch ist eine das Abreißen der Abreißschraube bewirkende Zugkraft ausübbar.

In einer Ausführungsart schließt eine Flanke des unsymmetrischen Gewindeprofils, insbesondere die beim Einschrauben druckbelastete Flanke, mit der Längsachse der Abreißschraube einen Winkel von mehr als 60° und weniger als 87° ein, insbesondere einen Winkel von mehr als 70° und weniger als 87°, und vorzugsweise einen Winkel von mehr als 80° und weniger als 87°. In einer bevorzugten Ausführungsform beträgt der eingeschlossene Winkel 85°, +/-1°.

In einer Ausführungsart beträgt der Flankenwinkel des Gewindeprofils mehr als 30° und weniger als 60°, insbesondere mehr als 40° und weniger als 55°, und vorzugsweise mehr als 45° und weniger als 55°. In einer besonderen Ausführungsart beträgt der Flankenwinkel 50°, +/-1°.

Durchgeführte Untersuchungen haben ergeben, dass durch die vorstehend genannte Flankengeometrie besonders günstige Gebrauchseigenschaften erreicht werden. Insbesondere wird dadurch auch dann, wenn aus Einzeldrähten bestehende elektrische Leiter geklemmt werden, eine Selbstzentrierung der Abreißschraube beim Eindrehen erreicht. Außerdem wird dadurch eine hohe Reproduzierbarkeit des sich einstellenden Abreißdrehmomentes erreicht. Insgesamt führt dies zu dauerhaft sehr guten Klemmeigenschaften der Abreißschraube bzw. des zugehörigen Schraubverbinders.

In einer Ausführungsart weist das unsymmetrische Gewindeprofil auf der radialen Außenseite eine definierte Verrundung auf. Insbesondere weist das unsymmetrische Gewindeprofil radial außen zwischen den beiden Flanken zwei Verrundungen mit einem dazwischen angeordneten planen Abschnitt auf. Auch dadurch sind die Gebrauchseigenschaften der erfindungsgemäßen Abreißschraube weiter verbessert, insbesondere ist die Reproduzierbarkeit des sich einstellenden Abreißdrehmoments weiter erhöht. In einer Ausführungsart beträgt die axiale Erstreckung des planen Abschnitts parallel zur Längsachse der Abreißschreibe nur wenige Bruchteile eines Millimeters, insbesondere weniger als 0,2 mm, und vorzugsweise weniger als 0,1 mm.

Die der vorliegenden Erfindung zugrundeliegende Aufgabe wird auch gelöst durch ein System, das eine Abreißschraube mit einem zwischen einem ersten Ende und einem in Längsrichtung gegenüberliegenden zweiten Ende angeordneten Gewindebereich, der über mindestens einen Teil seiner axialen Erstreckung ein Außengewinde zum Eindrehen der Abreißschraube in einen Gegenstand aufweist, insbesondere zum Eindrehen der Abreißschraube in einen Klemmenkörper einer Vorrichtung zum Schraubverbinden elektrischer Leiter, wobei die Abreißschraube eine mindestens zum ersten Ende hin offene Bohrung mit einer Abstützung aufweist; das System weist weiterhin ein in die Bohrung einsetzbares Schubelement auf, mittels dem durch Drehen auf oder in ein, in einem Bereich zwischen der Abstützung und dem ersten Ende angeordnetes Gewinde des Befestigungsmittels der Abreißschraube an der Abstützung eine Druckkraft in die Abreißschraube einleitbar ist, und gleichzeitig durch das Schubelement im Bereich des Gewindes eine Zugkraft in die Abreißschraube einleitbar ist, und dadurch eine das Abreißen bewirkende Zugspannung auf die Abreißschraube ausübbar ist. Die Abreißschraube ist dabei wie vorstehend beschrieben ausgebildet, und das Schubelement weist eine die Reibeigenschaften zwischen Schubelement und Abreißschraube verbessernde Beschichtung auf. In einer Ausführungsart besitzt die Beschichtung vorzugsweise eine Zinklamellen und/oder Aluminiumlamellen aufweisende Struktur.

Die Beschichtung des Schubelement kann dabei ergänzend oder vor allem alternativ zur Verwendung sonstiger Schmiermittel erfolgen. Durch die Verwendung der Beschichtung kann auch ohne aufwändige Selektionsmaßnahmen in der Serienfertigung erreicht werden, dass nur eine sehr geringe Streuung der Abreißdrehmomente auftritt, was einerseits die Montage vereinfacht und andererseits die Verbindungseigenschaften verbessert.

Außerdem haben Untersuchungen ergeben, dass durch die erfindungsgemäße Beschichtung auch die Dauer und Art der Lagerung der Abreißschrauben mit dem vormontierten Schubelement keinen Einfluss auf die Reibbeiwerte und damit auf das Abreißdrehmoment haben. Besonders vorteilhaft haben sich dabei Beschichtungen erwiesen, die aus Zink- und/oder Aluminiumlamellen in einer vorzugsweise anorganischen Matrix bestehen oder diese aufweisen, insbesondere dann, wenn die Beschichtung auf ein Schubelement aus Stahl aufgebracht ist.

Die der Erfindung zugrundeliegende Aufgabe ist auch gelöst durch eine Vorrichtung zum Schraubverbinden elektrischer Leiter, insbesondere eine Schraubverbindungsklemme, mit einem Klemmenkörper und mindestens einer in den Klemmenkörper einschraubbaren Abreißschraube wie vorstehend beschrieben. Die Vorrichtung kann insbesondere zum Verbinden von Leitern und Kabelleitern in Nieder-, Mittel- und Hochspannungsnetzen eingesetzt werden. Die Klemmbereiche können dabei zwischen 10 und mehr als 100 mm² betragen, insbesondere auch mehr als 500 mm². Der Klemmenkörper kann aus Aluminium hergestellt sein und/oder die Abreißschrauben aus Messing. Der Klemmenkörper kann insbesondere im Wesentlichen hohlzylindrisch ausgebildet sein mit radial in Bezug auf seine Längsachse verlaufenden Gewindebohrungen für eine oder mehrere Abreißschrauben für jeden zu klemmenden Leiter.

In einer Ausführungsart ist der Klemmenkörper aus einem Aluminiumwerkstoff hergestellt, der einen Kupferanteil von mehr als 0,1 % aufweist, insbesondere mehr als 0,2 %, und vorzugsweise mehr als 0,4 %. In einer Ausführungsform wird ein Aluminiumwerkstoff mit einem Kupferanteil zwischen 0,5 und 1,1 % verwendet, beispielsweise entsprechend der Spezifikation EN AW-6056.

Durch die Wahl einer solchen kupferhaltigen Aluminiumlegierung wird eine erhöhte Festigkeit erreicht, insbesondere eine erhöhte Festigkeit des Muttergewindes im Klemmenkörper, in welches die Abreißschraube einschraubbar ist. Hinzu kommt, dass Untersuchungen ergeben haben, dass dadurch auch das Relaxationsverhalten weiter verbessert ist, wodurch die dauerhaft sichere Klemmung weiter verbessert ist, insbesondere auch unter dem Einwirken höherer Temperaturen und insbesondere von betriebsbedingten Temperaturschwankungen.

In einer Ausführungsart ist zwischen dem Klemmenkörper, insbesondere dem Muttergewinde des Klemmenkörpers, und der Abreißschraube ein Schmiermittel eingebracht, insbesondere ein einen Festschmierstoff in Verbindung mit einem Mineralöl aufweisendes Schmiermittel. Dadurch wird der Reibbeiwert zwischen den in Eingriff befindlichen Gewinden der Abreißschraube und des Klemmenkörpers reduziert, wodurch die Klemmkraft weiter gesteigert ist.

In einer Ausführungsart weist der Klemmenkörper mindestens eine Öffnung zum Einführen des zu klemmenden elektrischen Leiters auf. In dieser Öffnung ist vorzugsweise vor dem Einführen des Leiters eine Zentrierhülse klemmend festlegbar, deren Innendurchmesser an den Außendurchmesser des zu klemmenden Leiters angepasst ist, insbesondere etwas größer ist. Durch die Verwendung einer von mehreren bereitgestellten Zentrierhülsen mit unterschiedlichen Innendurchmessern kann ein und derselbe metallische Klemmenkörper auf einfache Weise an Leiter mit unterschiedlichen Außendurchmessern angepasst und für diese verwendet werden. Das Einsetzen der geeigneten Zentrierhülse kann auch vor Ort durch den Monteur der Vorrichtung erfolgen. Hierzu ist es zweckdienlich, jeder Vorrichtung eine Anzahl von Zentrierhülsen mit unterschiedlichen Innendurchmessern beizulegen.

In einer Ausführungsart sind mehrere Zentrierhülsen, vorzugsweise Zentrierhülsen mit paarweise unterschiedlichen Innendurchmessern, gemeinsam an einem Haltestreifen angeordnet und vorzugsweise auch einstückig mit dem Haltestreifen ausgebildet. Dadurch wird zum einen verhindert, dass einzelne Zentrierhülsen beim Aufreißen eines Verpackungsbeutels verloren gehen oder beispielsweise beim Einsatz auf einer Baustelle verschmutzen, wenn sie versehentlich herunterfallen. Vielmehr kann der Monteur den kompletten Haltestreifen mit allen Zentrierhülsen zur Hand nehmen.

Außerdem kann an dem Haltestreifen und/oder an den Zentrierhülsen selbst auch eine Kennzeichnung der Zuordnung der Zentrierhülsen zu den jeweiligen Leiterquerschnitten erfolgen, beispielsweise direkt unter Angabe der Querschnittsbereiche. Der Monteur kann dadurch immer die kleinsten für den zu klemmenden Leiter noch passenden Zentrierhülsen verwenden.

Die Zentrierhülsen sind klemmend in dem Klemmenkörper bzw. dessen Öffnung festlegbar, beispielsweise unter Verwendung eines Schlagwerkzeuges. Der Haltestreifen kann hierbei als Handgriff bzw. Montagehilfe dienen, wenn die ausgewählte Zentrierhülse beispielsweise mit einem Hammer in der Öffnung des Klemmenkörpers eingeschlagen wird.

In einer Ausführungsart ist nach dem Einschrauben der Abreißschraube in den Klemmenkörper die zugehörige Öffnung des Klemmenkörpers mit einem Abdeckelement abdeckbar, wobei das Abdeckelement klemmend in der Öffnung des Klemmenkörpers oder in einer Öffnung der Abreißschraube festlegbar sein kann. Auch dadurch ist die Montage der erfindungsgemäßen Vorrichtungen weiter vereinfacht.

Nach dem Montieren des Verbinders an den zu klemmenden Leitungen bleibt nach dem Abreißen der Abreißschrauben eine mehr oder weniger ausgeprägte Vertiefung in der Oberfläche der Vorrichtung, die bei Verwendung in einigen Kabelgarnituren abgedeckt werden muss. Hierzu wurden in der Vergangenheit Abdeckkappen lose der Vorrichtung beigelegt, die in die Öffnung der Abreißschrauben einsetzbar sind. In einer Ausführungsart werden die erfindungsgemäßen Abdeckelemente an dem Klemmenkörper festgelegt, beispielsweise durch klemmende Abstützung in der für das Einschrauben der Abreißschraube vorgesehenen Öffnung im Klemmenkörper.

In einer Ausführungsart sind mehrere Abdeckelemente gemeinsam an einem Haltestreifen angeordnet und vorzugsweise mit dem Haltestreifen einstückig ausgebildet. Dies führt zu einer höheren Verliersicherheit gegenüber lose beiliegenden Abdeckelementen. Außerdem kann der Haltestreifen als Handgriff oder Montagehilfe beim Klemmen der Abdeckelemente an der Vorrichtung, insbesondere dem Klemmenkörper, eingesetzt werden.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht einer Vorrichtung zum Schraubverbinden von zwei elektrischen Leitern,
- Fig. 2: zeigt eine perspektivische Ansicht auf einen Längsschnitt durch die Vorrichtung der Fig. 1,
- Fig. 3: zeigt eine Seitenansicht des Längsschnitts durch die Vorrichtung,
- Fig. 4: zeigt eine Frontansicht auf die Vorrichtung,
- Fig. 5: zeigt einen vergrößerten Ausschnitt V des Gewindeabschnitts der Abreißschraube der Fig. 8,
- Fig. 6: zeigt einen vergrößerten Ausschnitt VI des Gewindeabschnitts des Klemmenkörpers der Fig. 3,
- Fig. 7: zeigt einen vergrößerten Ausschnitt VII der Fig. 3 mit der in den Klemmenkörper eingeschraubten Abreißschraube,
- Fig. 8: zeigt die Abreißschraube in vergrößerter Darstellung im Schnitt,
- Fig. 9: zeigt die Abreißschraube in der Seitenansicht,
- Fig. 10: zeigt eine Draufsicht auf insgesamt vier Abdeckelemente, die gemeinsam an einem Haltestreifen angeordnet sind, und
- Fig. 11: zeigt eine Draufsicht auf insgesamt vier Zentrierhülsen, die gemeinsam an einem Haltestreifen angeordnet sind.

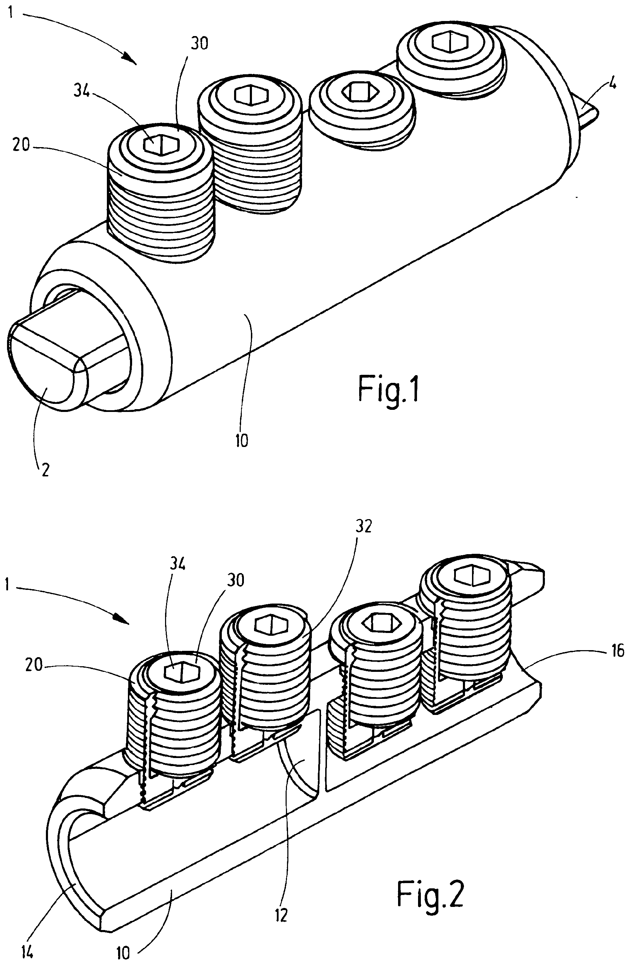

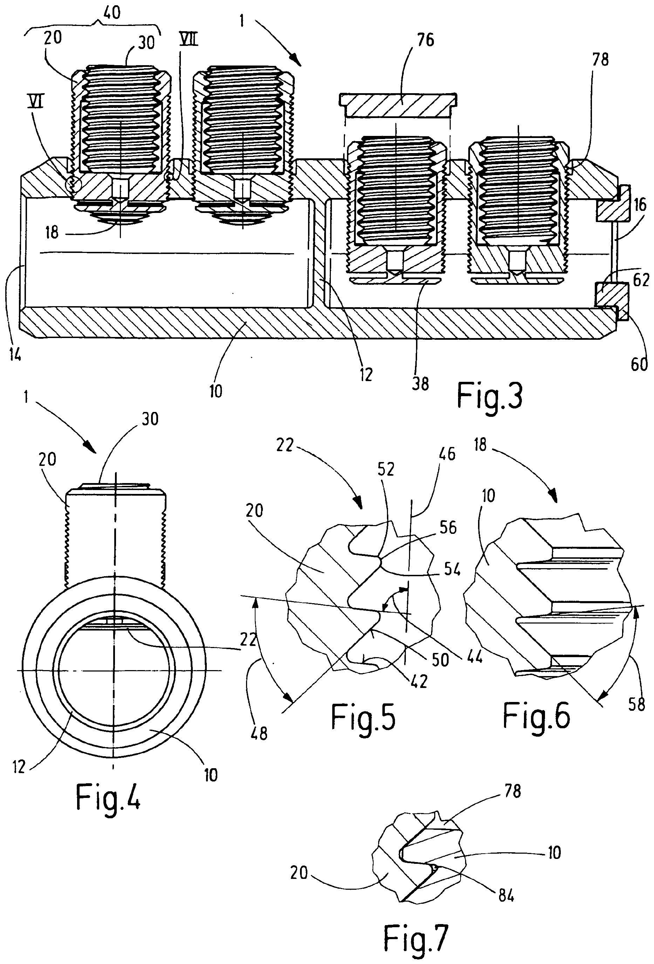

Die Fig. 1 zeigt eine perspektivische Ansicht einer Vorrichtung 1 zum Schraubverbinden von zwei elektrischen Leitern 2, 4 mit einem Klemmenkörper 10 und insgesamt vier, unterschiedlich tief in den Klemmenkörper 10 eingeschraubten Abreißschrauben 20. Die Fig. 2 zeigt eine perspektivische Ansicht auf einen Längsschnitt durch die Vorrichtung 1 der Fig. 1. Die Fig. 3 zeigt eine Seitenansicht des Schnitts durch die Vorrichtung 1. Die Fig. 4 zeigt eine Frontansicht auf die Vorrichtung 1.

Der Klemmenkörper 10 ist hülsenförmig und weist mittig eine Trennwand 12 und axial endseitig jeweils eine Öffnung 14, 16 zum Einführen der miteinander zu verbindenden Leiter 2, 4 auf. Der Klemmenkörper 10 weist radial zu seiner Längsachse verlaufende und die Zylinderwand durchbrechende Gewindebohrungen für das Einschrauben der Abreißschrauben 20 auf. Für jeden der zu klemmenden Leiter 2, 4 sind in diesem Ausführungsbeispiel zwei Abreißschrauben 20 vorgesehen. In der linken Bildhälfte der Figuren 1 bis 3 befinden sich die beiden Abreißschrauben 20 in der Ausgangsposition, beispielsweise im Auslieferungszustand der Vorrichtung 1. In der rechten Bildhälfte der Figuren 1 bis 3 befinden sich die Abreißschrauben 20 in einer weitgehend in den Klemmenkörper 10 eingeschraubten Position, in welcher die Abreißschrauben 20 den (nur in der Fig. 1) dargestellten Leiter 4 klemmen und elektrisch mit dem Klemmenkörper 10 verbinden.

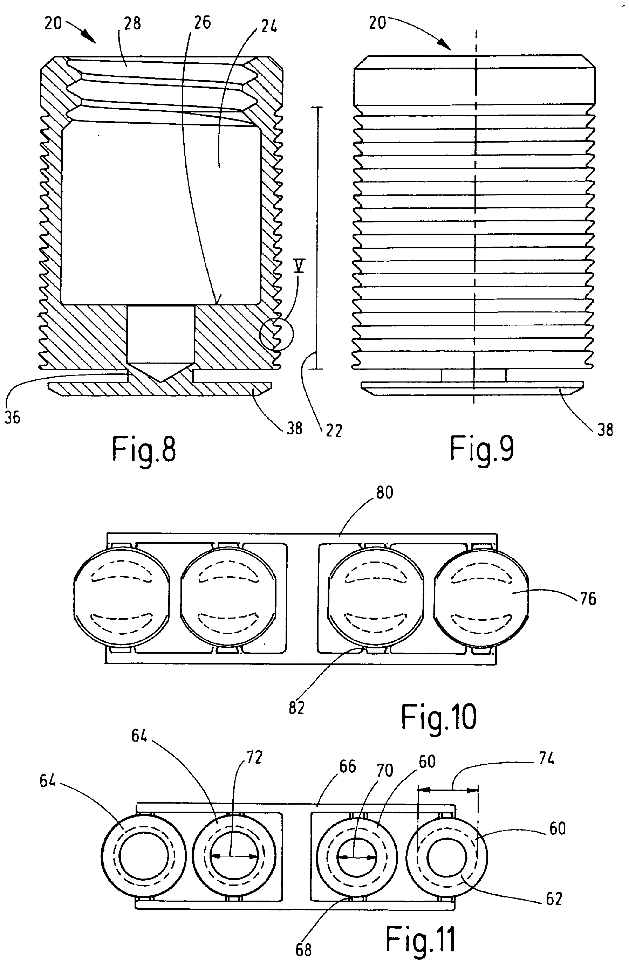

Die Fig. 8 zeigt die Abreißschraube 20 in vergrößerter Darstellung im Schnitt. Die Fig. 9 zeigt die Abreißschraube 20 in der Seitenansicht. Die Abreißschraube 20 weist zwischen einem ersten Ende und einem in Längsrichtung gegenüberliegenden zweiten Ende einen Gewindeabschnitt 22 mit einem Außengewinde auf. Das Außengewinde weist ein unsymmetrisches Gewindeprofil auf, insbesondere ein Sägengewinde. Die Fig. 5 zeigt einen vergrößerten Ausschnitt V des Gewindeabschnitts 22 der Abreißschraube 20 der Fig. 8. Das Innengewinde 18 des Klemmenkörpers 10 weist ebenfalls ein Sägengewinde auf. Die Fig. 6 zeigt in vergrößerter Darstellung den Ausschnitt VI der Fig. 3 mit dem Gewinde 18 des Klemmenkörpers 10. Die Fig. 7 zeigt in vergrößerter Darstellung den Ausschnitt VII der mit dem Innengewinde 18 im Klemmenkörper 10 verschraubten Abreißschraube 20.

Die Abreißschraube 20 weist eine zum ersten Ende hin offene Bohrung 24 auf, die sich zum zweiten Ende hin unter Bildung eines Absatzes 26 verjüngt. Der Absatz 26 bildet eine axiale Abstützung für ein in die Bohrung 24 einsetzbares Schubelement 30, das in den Figuren 1 bis 4 dargestellt ist. Die Abreißschraube 20 und das Schubelement 30 bilden ein erfindungsgemäßes System 40. An oder nahe seinem ersten Ende weist die Abreißschraube 20 ein Innengewinde 28 auf, mittels dem das Schubelement 30, das ein zugehöriges Außengewinde 32 aufweist, in die Abreißschraube 20 einschraubbar ist, bis das Schubelement 30 mit seinem axialen Ende in Anlage an den Absatz 26 kommt. Das Schubelement 30 weist zum Drehen eine Werkzeugangriffsfläche auf, insbesondere einen Innensechskant 34. Das Innengewinde 28 und der Gewindeabschnitt 22 auf der Außenseite der Abreißschraube 20 überlappen sich um etwa einen Gewindegang.

Beim weiteren Betätigen des Schubelements 30 wird die Abreißschraube 20 in den Klemmenkörper 10 eingedreht, bis ein im Ausgangszustand über eine verjüngte Sollbruchstelle 36 einstückig mit der Abreißschraube 20 verbundener Klemmabschnitt 38 in Anlage an den zu klemmenden Leiter 2, 4 kommt. Beim weiteren Betätigen des Schubelements 30 wird der Klemmabschnitt 38 von der Abreißschraube 20 abgetrennt und ist dieser gegenüber beim weiteren Eindrehen der Abreißschraube 20 drehbeweglich gelagert. Beim vollständigen Klemmen des Leiters 2, 4 übt das Schubelement 30 infolge des Eingriffs mit dem Innengewinde 28 und der Anlage an der Abstützung bzw. dem Absatz 26 eine Kraft auf die Abreißschraube 20 aus, durch welche diese an geeigneter Stelle abreißt. Aufgrund des unsymmetrischen Gewindeprofils im Gewindeabschnitt 22 werden dabei mit verhältnismäßig geringen Drehmomenten hohe Abreißkräfte erreicht.

Die beim Einschrauben druckbelastete Flanke 42 des Gewindeabschnitts 22 schließt dabei mit der Längsachse 46 der Abreißschraube 20 einen Winkel 44 von etwa 85° ein. Der Flankenwinkel 48 des unsymmetrischen Gewindeabschnitts 22 beträgt etwa 50°. Radial außenseitig weist der Übergang zwischen den beiden Flanken 42, 50 zwei Verrundungen 52, 54 mit einem dazwischenliegenden planen Abschnitt 56 auf, dessen axiale Erstreckung zwar gering ist, beispielsweise lediglich 0,03 mm beträgt, der aber zu einer weiteren Verbesserung der Ausreißfestigkeit des Gewindes 18 führt. Durch die Gestaltung des Überganges zwischen den beiden Flanken 42, 50 wird eine Kerbwirkung auf das Gewinde 18 des Klemmenkörpers 10 und damit ein ungewolltes Zerstören durch Ausreißen verhindert, was insbesondere dann wichtig ist, wenn der Klemmenkörper 10 wie im Ausführungsbeispiel aus einem weicheren Werkstoff als die Abreißschraube 20 hergestellt ist. Durch die Gestaltung des Überganges zwischen den beiden Flanken 42, 50 wird im Zusammenspiel mit der Form des Gewindes 18 des Klemmenkörpers 10 eine Vorrats- oder Verdrängungsraum 84 (Fig. 7) für ein Schmiermittel begrenzt, das zwischen dem Klemmenkörper 10, insbesondere dem Gewinde 18 des Klemmenkörpers 10, und der Abreißschraube 20 eingebracht ist. Im Ausführungsbeispiel beträgt der Außendurchmesser der Abreißschraube 20 etwa 18 mm. Die Länge des Klemmenkörpers 10 beträgt etwa 108 mm und die lichte Weite der Öffnungen 14, 16 beträgt etwa 20 mm.

Das Gewinde 18 des Klemmkörpers 10 ist an den unsymmetrischen Gewindeabschnitt 22 der Abreißschraube angepasst, insbesondere beträgt auch der Flankenwinkel 58 (Fig. 6) des Gewindes 18 etwa 50°.

Der Klemmenkörper 10 ist aus einem Aluminiumwerkstoff hergestellt, der einen Kupferanteil zwischen 0,5 und 1,1 % aufweist. Beispielsweise kann der Klemmenkörper 10 aus einem Aluminium gemäß der Spezifikation EN AW-6056 hergestellt sein. Zwischen dem Klemmenkörper 10 und den Abreißschrauben 20 ist ein Schmiermittel eingebracht, das einen Festschmierstoff in Verbindung mit einem Mineralöl aufweist.
Das Schubelement 30 weist eine Beschichtung auf, die vorzugsweise eine aus Zinklamellen und Aluminiumlamellen zusammengesetzte Struktur aufweist.

In die Öffnungen 14, 16 zum Einführen der zu klemmenden Leiter 2, 4 in den Klemmenkörper 10 ist eine hinsichtlich ihres Innendurchmessers an den Außendurchmesser des zu klemmenden Leiters 2, 4 angepasste Zentrierhülse 60 einsetzbar und dort klemmend festlegbar. Hierzu bildet die Zentrierhülse 60 einstückig einen stutzenförmigen Abschnitt 62 aus, dessen Außendurchmesser geringfügig größer ist als die lichte Weite der Öffnung 14, so dass die vorzugsweise aus einem Kunststoff hergestellte Zentrierhülse 60 durch eine elastische Verformung klemmend an der Öffnung 14 des Klemmenkörpers 10 festlegbar ist.

Die Fig. 11 zeigt eine Draufsicht auf insgesamt vier Zentrierhülsen 60, 64, die gemeinsam an einem Haltestreifen 66 angeordnet und einstückig mit diesem als Kunststoffspritzteil ausgebildet sind. Die Zentrierhülsen 60, 64 sind dabei über Verbindungsstege 68 mit dem Haltestreifen 66 verbunden und können durch Auftrennen der Verbindungsstege 68 einfach von dem Haltestreifen 66 getrennt werden. Die Zentrierhülsen 60, 64 weisen paarweise unterschiedliche Innendurchmesser 70, 72 auf. Durch Auswahl der passenden Zentrierhülse 60, 64 ist die Vorrichtung 1 mit identischem Klemmenkörper 10 an unterschiedliche Leiterquerschnitte der zu klemmenden Leiter 2, 4 anpassbar. Der Außendurchmesser 74 des stutzenförmigen Abschnitts 62 ist dabei bei den Zentrierhülsen 60, 64 übereinstimmend und passend zu dem jeweiligen Klemmenkörper 10.

Nach dem Einschrauben und Abreißen der Abreißschraube 20 ist die zugehörige Öffnung im Klemmenkörper 10 mit einem Abdeckelement 76 (Fig. 3) abdeckbar. Das Abdeckelement 76 wird dabei klemmend in der Öffnung des Klemmenkörpers 10 oder alternativ in einer Öffnung der Abreißschraube 20 festgelegt. Im Ausführungsbeispiel der Fig. 3 weist der Klemmenkörper 10 im Bereich des außenseitigen Endes des Gewindes 18 eine laterale Aufweitung 78 der zugehörigen Öffnung auf, durch die eine zylindrische Wandung gebildet ist, an welcher das vorzugsweise aus einem Kunststoff hergestellte Abdeckelement 76 durch elastische Verformung klemmend festlegbar ist. Dadurch ist auch die Öffnung 24 der Abreißschraube 20 abgedeckt.

Die Fig. 10 zeigt die insgesamt vier identisch ausgebildeten Abdeckelemente 76 der Vorrichtung 1, die gemeinsam an einem Haltestreifen 80 angeordnet sind und vorzugsweise einstückig mit dem Haltestreifen 80 als Kunststoffspritzteil ausgebildet sind.
Die Abdeckelemente 76 sind über leicht zu trennende Verbindungsstege 82 mit dem Haltestreifen 80 verbunden. Ebenso wie bei den Zentrierhülsen 60 kann auch bei den Abdeckelementen 76 der Haltestreifen 66 bzw. 80 als Handhabe oder Handgriff beim Anbringen der Zentrierhülsen 60 bzw. der Abdeckelemente 76 dienen.

## Patentansprüche

1. Abreißschraube (20), insbesondere für eine Vorrichtung (1) zum Schraubklemmen elektrischer Leiter (2, 4), mit einem Gewindeabschnitt (22) zum Einschrauben der Abreißschraube (20) in einen Klemmenkörper (10), **dadurch gekennzeichnet, dass** der Gewindeabschnitt (22) mindestens abschnittsweise ein Gewinde mit einem unsymmetrischen Gewindeprofil aufweist, insbesondere dass der Gewindeabschnitt (22) mindestens abschnittsweise ein Sägengewinde aufweist.

2. Abreißschraube (20) nach Anspruch 1, **dadurch gekennzeichnet, dass** eine Flanke (42, 50) des unsymmetrischen Gewindeprofils, insbesondere die beim Einschrauben druckbelastete Flanke (42), mit der Längsachse (46) der Abreißschraube (20) einen Winkel von mehr als 60° und weniger als 87° einschließt, insbesondere mehr als 70° und weniger als 87°, und vorzugsweise mehr als 80° und weniger als 87°.

3. Abreißschraube (20) nach Anspruch 1 oder 2, **dadurch gekennzeichnet, dass** der Flankenwinkel (48) des unsymmetrischen Gewindeprofils mehr als 30° und weniger als 60° beträgt, insbesondere mehr als 40° und weniger als 55° und vorzugsweise mehr als 45° und weniger als 55°.

4. Abreißschraube (20) nach einem der Ansprüche 1 bis 3, **dadurch gekennzeichnet, dass** das unsymmetrische Gewindeprofil auf der radialen Außenseite eine definierte Verrundung (52, 54) aufweist, insbesondere dass das unsymmetrische Gewindeprofil radial außen zwischen den beiden Flanken (42, 50) des unsymmetrischen Gewindeprofils zwei Verrundungen (52, 54) mit einem dazwischen angeordneten planen Abschnitt (56) aufweist.

5. System (40) aufweisend eine Abreißschraube (20) mit einem zwischen einem ersten Ende und einem in Längsrichtung gegenüberliegenden zweiten Ende angeordneten Gewindebereich (22), der über mindestens einen Teil seiner axialen Erstreckung ein Außengewinde zum Eindrehen der Abreißschraube (20) in einen Gegenstand aufweist, insbesondere zum Eindrehen der Abreißschraube (20) in einen Klemmenkörper (10) einer Vorrichtung (1) zum Schraubverbinden elektrischer Leiter (2, 4), und die Abreißschraube (20) eine mindestens zum ersten Ende hin offene Bohrung (24) mit einer Abstützung (26) aufweist, wobei das System (40) weiterhin ein in die Bohrung (24) einsetzbares Schubelement (30) aufweist, mittels dem durch Drehen auf oder in ein, in einem Bereich zwischen der Abstützung (26) und dem ersten Ende angeordnetes Gewinde der Abreißschraube (20) an der Abstützung (26) eine Druckkraft in die Abreißschraube (20) einleitbar ist, und gleichzeitig durch das Schubelement (30) im Bereich des Gewindes eine Zugkraft in die Abreißschraube (20) einleitbar ist, und dadurch eine das Abreißen bewirkende Zugspannung auf die Abreißschraube (20) ausübbar ist, **dadurch gekennzeichnet, dass** die Abreißschraube (20) nach einem der Ansprüche 1 bis 4 ausgebildet ist, und dass das Schubelement (30) eine die Reibeigenschaften zwischen Schubelement (30) und Abreißschraube (20) verbessernde Beschichtung aufweist, insbesondere dass die Beschichtung vorzugsweise eine Zinklamellen und/oder Aluminiumlamellen aufweisende Struktur besitzt.

6. Vorrichtung (1) zum Schraubverbinden elektrischer Leiter (2, 4), insbesondere Schraubverbindungsklemme, mit einem Klemmenkörper (10) und mindestens einer in den Klemmenkörper (10) einschraubbaren Abreißschraube (20) nach einem der Ansprüche 1 bis 4.

7. Vorrichtung (1) nach Anspruch 6, **dadurch gekennzeichnet, dass** der Klemmenkörper (10) aus einem Aluminium-Werkstoff hergestellt ist, der eine Kupferanteil von mehr als 0,1 % aufweist, insbesondere mehr als 0,2 %, und vorzugsweise mehr als 0,4 %.

8. Vorrichtung (1) nach Anspruch 6 oder 7, **dadurch gekennzeichnet, dass** zwischen Klemmenkörper (10) und Abreißschraube (20) ein Schmiermittel eingebracht ist, das einen Festschmierstoff in Verbindung mit einem Mineralöl aufweist.

9. Vorrichtung (1) nach einem der Ansprüche 6 bis 8, **dadurch gekennzeichnet, dass** der Klemmenkörper (10) mindestens eine Öffnung (14, 16) zum Einführen des zu klemmenden elektrischen Leiters (2, 4) aufweist, und dass in dieser Öffnung (14, 16) eine hinsichtlich ihres Innendurchmessers an den Außendurchmesser des zu klemmenden Leiters (2, 4) angepasste Zentrierhülse (60, 64) klemmend festgelegt ist.

10. Vorrichtung (1) nach Anspruch 9, **dadurch gekennzeichnet, dass** mehrere Zentrierhülsen (60, 64), vorzugsweise unterschiedliche Innendurchmesser (70, 72) aufweisende Zentrierhülsen (60, 64), gemeinsam an einem Haltestreifen (66) angeordnet sind und mit diesem vorzugsweise einstückig ausgebildet sind.

11. Vorrichtung (1) nach einem der Ansprüche 6 bis 10, **dadurch gekennzeichnet, dass** nach dem Einschrauben der Abreißschraube (20) in den Klemmenkörper (10) die zugehörige Öffnung des Klemmenkörpers (10) mit einem Abdeckelement (76) abdeckbar ist, und dass das Abdeckelement (76) klemmend in der Öffnung des Klemmenkörpers (10) oder in einer Öffnung der Abreißschraube (20) festlegbar ist.

12. Vorrichtung (1) nach Anspruch 11, **dadurch gekennzeichnet, dass** mehrere Abdeckelemente (76) gemeinsam an einem Haltestreifen (80) angeordnet sind und mit diesem vorzugsweise auch einstückig ausgebildet sind.
